# EUROPÄISCHE PATENTSCHRIFT

(11) **EP 3 106 329 B1**
(45) Veröffentlichungstag und Bekanntmachung des Hinweises auf die Patenterteilung: **06.01.2021**
(21) Anmeldenummer: 16170776.5
(22) Anmeldetag: 23.05.2016
(51) Int. Cl.: B60J 5/06, B60J 7/10

(54) **FAHRZEUGAUFBAU, INSBESONDERE FÜR NUTZFAHRZEUGE, NUTZFAHRZEUG MIT EINEM SOLCHEN FAHRZEUGAUFBAU UND HERSTELLUNGSVERFAHREN**
VEHICLE BODY, IN PARTICULAR FOR COMMERCIAL VEHICLES, COMMERCIAL VEHICLE WITH SUCH A VEHICLE BODY AND METHOD OF MANUFACTURING
CARROSSERIE DE VEHICULE, EN PARTICULIER POUR VEHICULES UTILITAIRES, VEHICULE UTILITAIRE COMPRENANT UNE TELLE CARROSSERIE ET PROCEDE DE FABRICATION

(30) Priorität: 03.06.2015 DE 102015108781
(43) Veröffentlichungstag der Anmeldung: 21.12.2016
(73) Patentinhaber: Kögel Trailer GmbH, 89349 Burtenbach (DE)
(72) Erfinder: Bielohlawek, Daniel, 86444 Affing (DE)
(74) Vertreter: Kilchert, Jochen

(56) Entgegenhaltungen:
- EP-A2- 1 254 801
- EP-A2- 2 371 594
- EP-A2- 2 556 976
- DE-A1-102004 045 908
- DE-C1- 10 210 773
- FR-A1- 2 782 039
- GB-A- 2 052 663

## Beschreibung

Die Erfindung betrifft einen Fahrzeugaufbau, insbesondere für Nutzfahrzeuge, nach dem Oberbegriff des Patentanspruchs 1. Ferner betrifft die Erfindung ein Nutzfahrzeug mit einem solchen Fahrzeugaufbau sowie ein Verfahren zum Herstellen eines solchen Fahrzeugaufbaus. Ein Fahrzeugaufbau der eingangs genannten Art ist beispielsweise aus EP 2 371 594 B1 bekannt.

Bei Fahrzeugaufbauten, die zur Begrenzung des Laderaums eine flexible Plane aufweisen, sind zusätzliche Maßnahmen erforderlich, um eine ausreichende Ladungssicherung zu erreichen. Insbesondere besteht die Gefahr, dass in Kurvenfahrten die Ladung seitlich nach außen drückt und durch die Plane nicht ausreichend in Position gehalten wird. Um dies zu vermeiden, können zwischen die vertikalen Rungen, insbesondere Eckrungen und/oder Mittelrungen, Sperrlatten bzw. Einstecklatten eingesetzt werden. Dies ist zeitaufwendig und erhöht die Standzeit eines Nutzfahrzeugs.

Alternativ ist es aus der Praxis bekannt, Seitenplanen zu verwenden, die in Planentaschen eingesetzte, vertikale Ladungssicherungslatten aufweisen. Diese versteifen die Plane stellenweise, so dass eine verbesserte, jedoch nicht vollständig ausreichende Ladungssicherung erreicht wird. Denn auch bei diesen Platten besteht das Risiko, dass sich, insbesondere bei Kurvenfahrt, Ladung an die Plane drückt und so die Seitenplane ausbeult, was einerseits zu einem erhöhten Planenverschleiß und andererseits zu einer Schwerpunktverschiebung führen kann, die die Fahrstabilität des Fahrzeugs spürbar beeinträchtigt.

Um die Ladungssicherung zu verbessern, schlägt EP 2 371 594 B1 vor, an einer Innenseite der Plane Haken anzubringen, die in geschlossenem Zustand der Plane in korrespondierende Ausnehmungen an den Mittelrungen des Fahrzeugaufbaus eingreifen. Die Plane ist so nicht nur an den Eckrungen, sondern auch an den Mittelrungen festgelegt. Auf die Plane einwirkende Kräfte, beispielsweise durch verrutschende oder kippende Ladung, können daher in den Fahrzeugaufbau eingeleitet werden. Bei dem bekannten Befestigungsmechanismus sind die Haken der Plane an Verstärkungsblechen befestigt, die vertikal durch die Plane verlaufen. An den Verstärkungsblechen können außerdem von außen greifbare Schlaufen angeordnet sein, so dass das Verstärkungsblech vom Bediener des Ladungssicherungssystems angehoben und so die Haken an der Innenseite der Plane in die Ausnehmungen in den Mittelrungen eingefädelt werden können.

Nachteilig bei dem bekannten Ladungssicherungssystem bzw. Befestigungsmechanismus ist, dass das Einfädeln der Haken in die Öffnungen an den Mittelrungen eine hohe Positioniergenauigkeit erfordert. Dabei besteht kein Sichtkontakt, denn die Plane ist üblicherweise nicht transparent. Da Seitenplanen in Längsrichtung des Fahrzeugaufbaus gespannt werden, um ein Flattern der Plane während der Fahrt zu vermeiden, kann sich die Position zwischen den Haken an der Plane und den Öffnungen in den Mittelrungen stark verändern. Das Einhaken der Plane an die Mittelrungen wird so erheblich erschwert. Der Zeitaufwand für die Befestigung der Plane an den Mittelrungen wird so zusätzlich erhöht. Dies wird durch die Flexibilität und die Höhe der Plane zusätzlich erschwert, denn beim Anheben der Verstärkungsplatte kann diese seitlich kippen. Dies gilt insbesondere dann, wenn der Haken auf einer vom Bediener aus nicht mehr erreichbaren Höhe angeordnet ist.

DE 10 2004 045 908 A1 offenbart eine Spanneinrichtung für eine Seitenplane eines Nutzfahrzeugaufbaus, die vorzugsweise an einer Eckrunge angebracht ist, um die Seitenplane über die gesamte Seitenfläche des Nutzfahrzeugaufbaus unter Spannung zu halten. Die Spanneinrichtung weist ein scharnierartiges Element auf, in welche die Seitenplane eingreift und das die Seitenplane durch eine Drehbewegung entlang einer Vertikalachse spannt. Die Spannung kann daher nur in Fahrzeuglängsrichtung, insbesondere nur in eine einzige Fahrzeuglängsrichtung, aufgebracht werden.

Die Aufgabe der Erfindung besteht darin, einen Fahrzeugaufbau anzugeben, der einen einfach bedienbaren Befestigungsmechanismus aufweist und eine zuverlässige Ladungssicherung gewährleistet. Ferner ist es Aufgabe der Erfindung, ein Nutzfahrzeug mit einem solchen Fahrzeugaufbau und ein Herstellungsverfahren anzugeben.

Diese Aufgabe wird im Hinblick auf den Fahrzeugaufbau durch den Gegenstand des Patentanspruchs 1, im Hinblick auf das Nutzfahrzeug durch den Gegenstand des Patentanspruchs 14 und im Hinblick auf das Herstellungsverfahren durch den Gegenstand des Patentanspruchs 15 gelöst.

Die Erfindung beruht auf dem Gedanken, einen Fahrzeugaufbau, insbesondere für Nutzfahrzeuge, mit wenigstens einer Mittelrunge und einer Plane anzugeben. Die Plane ist in einem geschlossenen Zustand durch einen Befestigungsmechanismus an der Mittelrunge fixierbar und begrenzt einen Laderaum. Der Befestigungsmechanismus weist vorzugsweise eine an der Mittelrunge beweglich angeordnete Verriegelungseinrichtung auf.

Bei der Erfindung ist insofern vorgesehen, dass die Verriegelungseinrichtung an der Mittelrunge beweglich angeordnet ist. Die Position der Verriegelungseinrichtung hinsichtlich der Mittelrunge ist somit festgelegt. Das erleichtert die Betätigung des Befestigungsmechanismus erheblich. Insbesondere ist zur Fixierung der Plane an der Mittelrunge keine direkte Bewegung bzw. Manipulation der Plane erforderlich, so dass Ungenauigkeiten bei der Positionierung der Plane gegenüber der Mittelrunge gut ausgeglichen werden können. Dies reduziert den Zeitaufwand zur Fixierung der Plane an der Mittelrunge. Durch die beweglich angeordnete Verriegelungseinrichtung ist außerdem eine hohe Zuverlässigkeit der Verbindung zwischen der Plane und der Mittelrunge erreichbar.

Um die Betätigung des Befestigungsmechanismus weiter zu erleichtern, ist die Verriegelungseinrichtung vorzugsweise von außerhalb des Laderaums betätigbar. Damit kann die Verriegelungseinrichtung besonders einfach auch bei voll beladenem Laderaum genutzt werden. Dies erhöht den Bedienkomfort des Befestigungsmechanismus und führt zu einer guten und zuverlässigen Ladungssicherung.

In einer besonders bevorzugten Ausgestaltung kann die Verriegelungseinrichtung eine drehbare und vertikal verschiebbare Welle aufweisen. Die Welle kann sich über eine Teillänge oder die gesamte Länge der Mittelrunge erstrecken. Die Welle ermöglicht es, die Plane an ein oder mehreren Punkten in Höhenrichtung der Mittelrunge zu fixieren. So kann die Plane über ihre gesamte Höhe, zumindest an mehreren Stellen, an der Mittelrunge fixiert werden, was auch die Ladungssicherungsfunktion weiter verbessert.

Die Verriegelungseinrichtung, insbesondere die Welle, weist vorzugsweise einen Betätigungshebel auf. Der Betätigungshebel kann im geschlossenen Zustand der Plane frei zugänglich angeordnet sein. Insbesondere kann vorgesehen sein, dass der Betätigungshebel in vertikaler Richtung unterhalb der Plane frei zugänglich angeordnet ist. Der Betätigungshebel ermöglicht es, auf einfache Weise eine relativ große Kraft auf den Befestigungsmechanismus aufzubringen, so dass eine gute und feste Fixierung der Plane an der Mittelrunge erreicht werden kann. Die Bedienung wird vereinfacht, indem der Betätigungshebel frei zugänglich ist. Insbesondere ist der Betätigungshebel vorzugsweise auf einer Höhe, nämlich unterhalb der Plane angeordnet, so dass er für den Bediener leicht erreicht werden kann. Wenn die Verriegelungseinrichtung eine Welle aufweist, an der der Betätigungshebel angeordnet ist, kann mit dem Betätigungshebel eine Fixierung der Plane an mehreren Stellen über ihre Höhe entlang der Mittelrunge erreicht werden. So kann also mit einem Handgriff eine gute und feste Verbindung zwischen der Plane und der Mittelrunge auch in Bereichen hergestellt werden, die außerhalb der Armreichweite des Bedieners liegen.

Der Betätigungshebel ist vorzugsweise von einer Verriegelungsstellung in eine Lösestellung bewegbar. In der Lösestellung kann der Betätigungshebel im Wesentlichen senkrecht zu einem Außenrahmen des Fahrzeugaufbaus ausgerichtet sein. In der Verriegelungsstellung ist der Betätigungshebel vorzugsweise parallel zum Außenrahmen ausgerichtet bzw. liegt an dem Außenrahmen an. Der Betätigungshebel kann in der Verriegelungsstellung am Außenrahmen fixierbar sein.

Die Verriegelungseinrichtung weist vorzugsweise wenigstens ein Eingriffselement auf, das zum lösbaren Eingriff in ein Aufnahmeelement der Plane angepasst ist. Das Eingriffselement kann drehfest mit der Welle verbunden sein. Es ist auch möglich, dass die Verriegelungseinrichtung bzw. die Welle mehrere Eingriffselemente umfasst, die in jeweils ein Aufnahmeelement der Plane eingreifen können. Dies ermöglicht eine besonders einfache und sichere Fixierung der Plane an der Mittelrunge. Das Eingriffselement, das an der bewegbaren Verriegelungseinrichtung, vorzugsweise an der drehbaren und vertikal verschiebbaren Welle angeordnet ist, lässt sich leicht in eine Lösestellung, eine Eingriffsstellung und eine Verriegelungsstellung bringen.

In der Lösestellung ist das Eingriffselement von dem Aufnahmeelement der Plane getrennt. In der Eingriffsstellung greift das Eingriffselement in das Aufnahmeelement der Plane ein. In der Verriegelungsstellung spannt das Eingriffselement die Plane fest gegen die Mittelrunge. Dies ist insbesondere dann vorteilhaft machbar, wenn das Eingriffselement drehfest mit der drehbaren Welle verbunden ist. Durch Drehung der Welle kann das Eingriffselement von der Eingriffsstellung in die Verriegelungsstellung gebracht werden. Die Überführung von der Eingriffsstellung in die Lösestellung erfolgt vorzugsweise durch vertikales Verschieben der Welle.

Das Aufnahmeelement ist vorzugsweise an einer Innenseite der Plane angeordnet. Das hat den Vorteil, dass die Außenseite der Plane die übliche, durchgängige Glätte aufweist. Die Plane kann also weiterhin auf einfache Weise mit einer gewünschten Bedruckung versehen werden. Überdies trägt die Anordnung des Aufnahmeelements auf der Innenseite der Plane auch zu der Dichtigkeit der Plane bzw. des gesamten Fahrzeugaufbaus bei.

Vorzugsweise ist das Aufnahmeelement durch eine Schlaufe oder ein starres Profilelement gebildet. Das Aufnahmeelement, insbesondere die Schlaufe, kann längenverstellbar sein. Die Längenverstellbarkeit des Aufnahmeelements, insbesondere der Schlaufe, ermöglicht es, eine alterungsbedingte Längung der Plane auszugleichen. Ferner kann auf diese Weise die Spannung, die von der Verriegelungseinrichtung auf die Plane aufgebracht wird, um die Plane gegen die Mittelrunge zu spannen, eingestellt werden.

Um den Eingriff des Eingriffselements in das Aufnahmeelement zu erleichtern, ist in einer bevorzugten Variante vorgesehen, dass das Eingriffselement eine abgeschrägte Spitze aufweist. Die Spitze kann auch konisch zulaufend ausgebildet sein. Insbesondere ist vorgesehen, dass das Eingriffselement eine Spitze umfasst, die derart angepasst ist, dass sie leicht in das Aufnahmeelement, insbesondere eine Schlaufe, hineingleiten kann. Dies stellt sicher, dass die Plane durch Betätigung des Befestigungsmechanismus gut an der Mittelrunge festgelegt wird. Insbesondere wird so vermieden, dass das Eingriffselement das Aufnahmeelement verfehlt.

Die Schlaufe, die das Aufnahmeelement bildet, kann Teil eines Gurtbandes sein, das sich in Längsrichtung des Fahrzeugaufbaus auf der Planeninnenseite erstreckt. Das Gurtband kann mit der Plane vernäht oder in Planentaschen angeordnet sein, wobei im Bereich der Mittelrungen das Gurtband frei liegt und so die Schlaufe bildet. Bei geschlossener Plane kann nun das Eingriffselement senkrecht zur Längsrichtung des Fahrzeugaufbaus ausgerichtet werden. Dabei drückt das Eingriffselement von Innen gegen die Plane, die aufgrund ihrer Gewichtskraft bzw. ihrer Spannung, die durch an der Unterkante der Plane angeordnete Planenspanner aufgebracht wird, ausgewölbt wird. Damit ist sichergestellt, dass das Eingriffselement eng an der Innenseite der Plane anliegt. Durch eine vertikale Bewegung des Eingriffselements nach oben oder unten gleitet dieses an der Innenseite der Plane entlang und hintergreift die Schlaufe. Dabei gelangt das Eingriffselement in die Eingriffsstellung. Durch Zurückdrehen des Eingriffselements um 90° wird die Plane nun über die Schlaufe an die Mittelrunge gezogen und in dieser Verriegelungsstellung fixiert.

In diesem Zusammenhang hat es sich als besonders vorteilhaft herausgestellt, wenn das Eingriffselement parallel zum Betätigungshebel ausgerichtet ist. Dies erleichtert die intuitive Bedienung des Befestigungsmechanismus für den Bediener und vermeidet Bedienfehler. Außerdem ist auf diese Weise sichergestellt, dass der Betätigungshebel im Verriegelungszustand in Längsrichtung des Fahrzeugaufbaus ausgerichtet ist und nicht seitlich über den Fahrzeugaufbau vorsteht.

Die Welle der Verriegelungseinrichtung bzw. des Befestigungsmechanismus kann in einer Führungsleiste drehbar gelagert sein, die seitlich an der Mittelrunge befestigt ist. Insbesondere kann die Führungsleiste in Aufbaulängsrichtung, d.h. in Längsrichtung des Fahrzeugaufbaus, fluchtend mit der Mittelrunge ausgerichtet und so an der Mittelrunge befestigt sein. Diese Variante eignet sich besonders für die Nachrüstung vorhandener Fahrzeugaufbauten mit einem Befestigungsmechanismus bzw. einer Verriegelungseinrichtung. Auch in der Serienfertigung hat dies Vorteile, da auf diese Weise Fahrzeugaufbauten in der laufenden Produktion optional mit dem Befestigungsmechanismus ausgestattet werden können.

Die Führungsleiste kann außerdem eine Ausnehmung aufweisen. Die Ausnehmung weist vorzugsweise eine Höhe auf, die so angepasst ist, dass das Eingriffselement von einer Lösestellung in eine Eingriffsstellung vertikal verschiebbar ist. In der Lösestellung ist das Eingriffselement vorzugsweise senkrecht zur Mittelrunge ausgerichtet. Die Verriegelungseinrichtung bzw. die Welle kann dabei in einer vertikal unteren Position angeordnet sein. Dabei kann das Eingriffselement auf einer unteren Begrenzungskante der Ausnehmung aufliegen, die insoweit einen Anschlag bildet. In der Eingriffsstellung ist das Eingriffselement vorzugsweise ebenfalls rechtwinklig zur Mittelrunge ausgerichtet, wobei jedoch die Welle bzw. die Verriegelungseinrichtung mit dem Eingriffselement vertikal nach oben verschoben ist. Dabei kann eine obere Begrenzungskante der Ausnehmung einen oberen Anschlag für das Eingriffselement bilden. Insofern weist die Ausnehmung eine Doppelfunktion auf, da sie einerseits einen Anschlag für die vertikale Bewegung des Eingriffselements bildet und andererseits eine Drehbewegung der Welle mit dem Eingriffselement in der Führungsleiste zulässt. Insgesamt führt dies zu einem vergleichsweise einfachen Aufbau der Verriegelungseinrichtung.

Die Führungsleiste kann außerdem eine Lattenaufnahme für eine Einstecklatte bzw. Sperrlatte aufweisen. Einstecklatten werden beispielsweise verwendet, um den Abstand zwischen zwei in Aufbaulängsrichtung benachbarten Mittelrungen zu überbrücken und insoweit eine zusätzliche seitliche Laderaumbegrenzung hinterhalb der Plane vorzusehen. Durch die Lattenaufnahme in der Führungsleiste wird so die Möglichkeit geschaffen, die Ladungssicherung weiter zu optimieren. Ferner kann die Lattenaufnahme dazu beitragen, die Welle in der Führungsleiste zu fixieren. Insbesondere wird durch entsprechende Anordnung der Lattenaufnahme in der Führungsleiste ein Hohlkanal gebildet, in dem die Welle vertikal verschiebbar und drehbar angeordnet bzw. gelagert sein kann. Diese Doppelfunktion der Lattenaufnahme vereinfacht ebenfalls die Konstruktion der Verriegelungseinrichtung bzw. des Befestigungsmechanismus.

Im Rahmen der Erfindung wird außerdem ein Nutzfahrzeug, insbesondere ein Planensattelauflieger, mit einem zuvor beschriebenen Fahrzeugaufbau offenbart und beansprucht.

Ein weiterer Aspekt der Erfindung betrifft ein Verfahren zum Herstellen eines zuvor beschriebenen Fahrzeugaufbaus oder zuvor beschriebenen Nutzfahrzeugs, wobei wenigstens eine Verriegelungseinrichtung des Befestigungsmechanismus mit wenigstens einer Mittelrunge des Fahrzeugaufbaus fest verbunden wird. Ferner kann wenigstens ein Aufnahmeelement des Befestigungsmechanismus mit der Plane des Fahrzeugaufbaus fest verbunden werden. Diese Variante des Herstellungsverfahrens eignet sich besonders für die Produktion neuer Produkte in Serienfertigung. Alternativ kann ein vorhandener Fahrzeugaufbau oder ein vorhandenes Nutzfahrzeug mit dem Befestigungsmechanismus nachgerüstet werden. Insoweit ist vorgesehen, dass bei dem Herstellungsverfahren wenigstens eine Verriegelungseinrichtung des Befestigungsmechanismus mit wenigstens einer Mittelrunge des Fahrzeugaufbaus verbunden wird und eine vorhandene Plane durch eine Plane mit wenigstens einem Aufnahmeelement ersetzt wird. Dies erspart die nachträgliche Montage einzelner Aufnahmeelemente an der Plane und reduziert die durch die Nachrüstung bedingte Ausfallzeit des Fahrzeugaufbaus bzw. Nutzfahrzeugs.

Die Erfindung wird im Folgenden anhand von Ausführungsbeispielen unter Bezugnahme auf die beigefügten, schematischen Zeichnungen näher erläutert. Darin zeigen:
- Fig. 1:: eine Seitenansicht des Befestigungsmechanismus eines erfindungsgemäßen Fahrzeugaufbaus nach einem bevorzugten Ausführungsbeispiel;
- Fig. 2:: eine Querschnittsansicht der Verriegelungseinrichtung gemäß Fig. 1 in der Verriegelungsstellung;
- Fig. 3:: eine Querschnittsansicht der Verriegelungseinrichtung gemäß Fig. 1 in der Eingriffsstellung;
- Fig. 4:: eine Seitenansicht auf einen erfindungsgemäßen Fahrzeugaufbau nach einem bevorzugten Ausführungsbeispiel mit zwei Verriegelungseinrichtungen, wobei eine Verriegelungseinrichtung in der Verriegelungsstellung und eine weitere Verriegelungseinrichtung in der Lösestellung dargestellt ist;
- Fig. 5:: eine Draufsicht auf eine Verriegelungseinrichtung gemäß Fig. 4, wobei sowohl die Lösestellung, als auch die Spannstellung angedeutet ist; und
- Fig. 6:: eine Seitenansicht der Verriegelungseinrichtung gemäß Fig. 5.

In den beigefügten Zeichnungen ist jeweils ein Teil eines Fahrzeugaufbaus gezeigt, der mit einem Befestigungsmechanismus für die Fixierung einer Plane 20 einer Mittelrunge 10 des Fahrzeugaufbaus umfasst. Der Fahrzeugaufbau ist vorzugsweise als Nutzfahrzeugaufbau, beispielsweise für Sattelauflieger oder Lastkraftwagen, ausgebildet. Der Fahrzeugaufbau kann Teil eines Planensattelaufliegers sein.

Der Fahrzeugaufbau weist vorzugsweise einen Ladeboden und ein Dach auf, wobei sich zwischen dem Ladeboden und dem Dach vertikale Rungen erstrecken. Das Dach umfasst Dachholme 30 und Querspriegel und ist insbesondere auf Eckrungen abgestützt, die auf einem Außenrahmen 40 des Ladebodens aufstehen. In Fahrzeuglängsrichtung sind zwischen den Eckrungen mehrere Mittelrungen vorgesehen, die ebenfalls vertikal zwischen dem Außenrahmen 40 und den Dachholmen angeordnet sind. Vorzugsweise sind zwischen zwei in Aufbaulängsrichtung benachbarten Eckrungen drei Mittelrungen 10 vorgesehen. Dabei sind die Mittelrungen 10 derart angeordnet, dass zwischen den Mittelrungen 10 und den Eckrungen im Wesentlichen gleiche Abstände bestehen.

Das Dach und der Ladeboden bilden eine obere und untere Begrenzung eines Laderaums. Seitlich ist der Laderaum durch eine Plane 20 begrenzt. Die Plane 20 kann verschiebbar am Dachholm 30 gelagert sein. Die Plane 20 erstreckt sich in einem geschlossenen Zustand von einer vorderen Eckrunge bis zu einer hinteren Eckrunge und überspannt dabei die Mittelrungen 10. Die Plane 20 kann vertikale Planentaschen aufweisen, in welchen Planken angeordnet sind. Die Planken können als Aluminium- oder Kunststoffplanken ausgebildet sein. Durch die Planken wird die Plane 20 versteift, wodurch die Ladungssicherungsfunktion der Plane 20 verbessert wird.

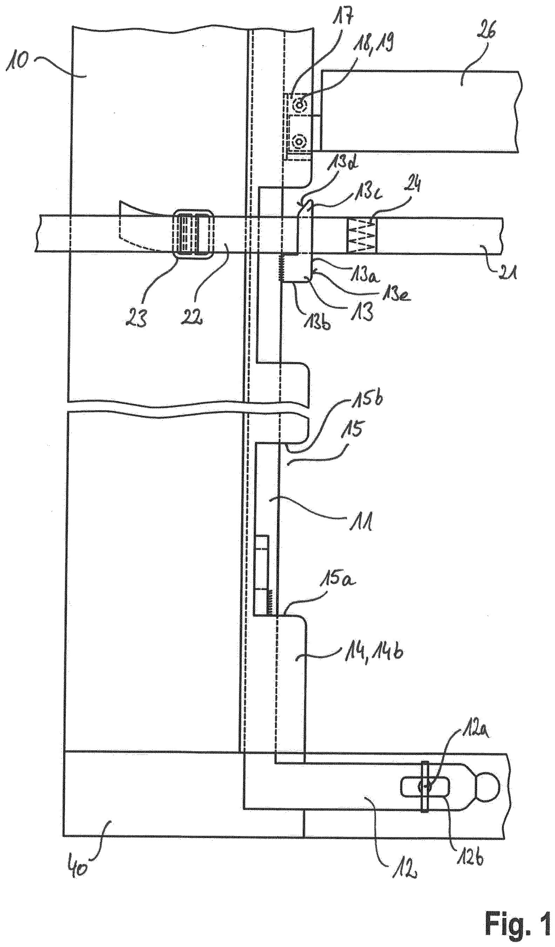

Fig. 1 zeigt in einer Seitenansicht eine Mittelrunge 10, wobei zusätzlich ein Gurtband 21 als Aufnahmeelement einer die Mittelrunge 10 überspannenden Plane 20 angedeutet ist. Die Plane 20 selbst ist aus Gründen der Übersichtlichkeit nicht gezeigt. An der Mittelrunge 10 ist eine Verriegelungseinrichtung des Befestigungsmechanismus angeordnet. Die Verriegelungseinrichtung umfasst insbesondere eine Führungsleiste 14, die an der Mittelrunge 10 befestigt ist. Die Führungsleiste 14 kann mit der Mittelrunge 10 verschraubt, vernietet, verklebt und/oder verschweißt sein. Vorzugsweise ist die Führungsleiste 14 fluchtend mit der Mittelrunge 10 in Aufbaulängsrichtung ausgerichtet. Die Führungsleiste 14 ragt so weder in den Laderaum hinein, noch über die Außenfläche der Mittelunge 10 hinaus.

In der Führungsleiste 14 ist eine Welle 11 angeordnet. Die Welle 11 ist in vertikaler Richtung verschiebbar. Ferner ist die Welle 11 in der Führungsleiste 14 drehbar gelagert. Die Welle 11 kann als Stahl oder Aluminiumwelle ausgebildet sein.

An einem unteren Ende der Welle 11 ist ein Betätigungshebel 12 angeordnet. Der Betätigungshebel 12 ist in einer Eingriffsstellung bzw. einer Verriegelungsstellung der Welle 11 vorzugsweise auf Höhe des Außenrahmens 40 des Fahrzeugaufbaus angeordnet. In der Eingriffsstellung bzw. der Verriegelungsstellung ist die Welle 11 vorzugsweise in eine obere Anschlagposition verschoben.

An der Welle 11 ist ein Haken 13 angebracht, der ein Eingriffselement der Verriegelungseinrichtung bildet. Der Haken 13 ist drehfest mit der Welle verbunden. Insbesondere kann der Haken 13 mit der Welle verschraubt, vernietet, verschweißt und/oder formschlüssig, insbesondere durch Verklemmen und/oder Einhaken, verbunden sein. Vorzugsweise ist der Haken 13 parallel zum Betätigungshebel 12 ausgerichtet. Mit anderen Worten erstreckt sich der Haken 13 in der gleichen Richtung radial von der Welle 11 weg wie der Betätigungshebel 12.

Der Haken 13 weist einen vertikalen Abschnitt 13a auf, der senkrecht zu einem horizontalen Abschnitt 13b ausgerichtet ist. Der horizontale Abschnitt 13b ist direkt an einem Außenumfang der Welle 11 angeordnet und fest mit der Welle 11 verbunden. Der vertikale Abschnitt 13a verläuft parallel zur Welle 11 und weist eine Spitze 13c auf. Die Spitze 13c ist abgeschrägt, wobei eine schräge Fläche 13d der Spitze 13c unter einem Winkel auf eine Außenfläche 13e des vertikalen Abschnitts 13a trifft. Entlang der Welle 11 können mehrere Haken 13 vorgesehen sein.

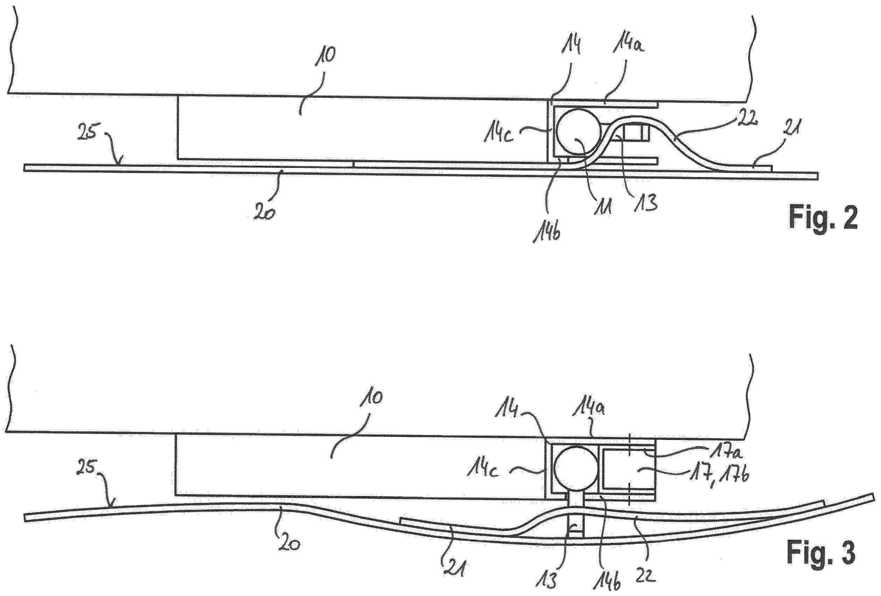

Die Führungsleiste 14 weist im Wesentlichen ein U-Profil auf. Dies ist in den Figuren 2 und 3 gut erkennbar. Das U-Profil umfasst einen inneren Schenkel 14a, einen äußeren Schenkel 14b und eine Rückwand 14c, die die Schenkel 14a, 14b miteinander verbindet. Die Führungsleiste ist mit der Rückwand 14c an der Mittelrunge 10 befestigt. Der innere Schenkel 14a ist dem Laderaum des Fahrzeugaufbaus zugewandt. Der äußere Schenkel 14b erstreckt sich auf der der Plane 20 zugewandten Seite im Wesentlichen parallel zur Außenfläche der Mittelrunge 10.

Im äußeren Schenkel 14b ist wenigstens ein Freischnitt bzw. eine Ausnehmung 15 angeordnet. Insbesondere ist vorgesehen, dass jedem Haken 13 an der Welle 11 eine Ausnehmung 15 in der Führungsleiste 14 zugeordnet ist.

Die Ausnehmung 15 weist eine Länge auf, die im Wesentlichen der vertikalen Verschiebebewegung der Welle 11 entspricht, die erforderlich ist, um den Haken 13 von der Lösestellung in die Eingriffsstellung und umgekehrt zu überführen. Dabei erlaubt die Ausnehmung 15 eine Verschiebung der Welle 11 über einen vorbestimmten Weg, wenn der Haken 13 senkrecht nach außen zeigt. Die Ausnehmung 15 bildet insoweit ein Fenster in der Führungsleiste 14, so dass der Haken 13 von einer in Aufbaulängsrichtung ausgerichteten Stellung in eine in Aufbauquerrichtung bzw. nach außen weisende Stellung verdreht werden kann. Dabei bildet die untere Begrenzungskante 15a einen unteren Anschlag, so dass die Welle 11 nicht aus der Führungsleiste 14 rutschen kann. Die obere Begrenzungskante 15b bietet einen weiteren Anschlag, der die Verschiebebewegung der Welle 11 nach oben begrenzt. Der Haken 13 schlägt also in der nach außen gedrehten Stellung entweder an der oberen Begrenzungskante 15b oder an der unteren Begrenzungskante 15a an, so dass insgesamt eine Begrenzung des Verschiebewegs der Welle 11 gewährleistet ist.

In der Führungsleiste 14 ist ferner mindestens eine Fixierung angeordnet, die sich zwischen dem inneren Schenkel 14a und dem äußeren Schenkel 14b erstreckt. Die Fixierung ist insbesondere mit den Schenkeln 14a, 14b fest verbunden und begrenzt so einen rechteckigen Hohlraum zwischen dem inneren Schenkel 14a, dem äußeren Schenkel 14b und der Rückwand 14c. Durch den Hohlraum bzw. den so durch die Fixierung geschlossenen Durchgang erstreckt sich die Welle 11. Die Fixierung kann als Lattenaufnahme 17 bzw. Lattentasche ausgebildet. Insbesondere kann die Lattenaufnahme 17 im Wesentlichen durch ein U-Profil 17a gebildet sein, das an einem unteren Längsende eine Auflageplatte 17b aufweist. Die Lattenaufnahme 17 ermöglicht es, eine Einstecklatte 26 als zusätzliches Ladungssicherungsbauteil aufzunehmen. Die Einstecklatte 26 ist vorzugsweise in zwei Lattenaufnahmen 17 eingelegt, die jeweils an in Aufbaulängsrichtung benachbarten Mittelrungen 10 oder an einer Mittelrunge 10 und einer in Aufbaulängsrichtung benachbarten Eckrunge angeordnet sind. Die Einstecklatte 26 erstreckt sich auf der dem Laderaum zugewandten Seite hinter der Plane 20. In Höhenrichtung können zwischen mehrere Lattenaufnahmen 17 zur Aufnahme von Einstecklatten 26 an einer Mittelrunge 10 angeordnet sein.

Die Plane 20 weist als Gegenelement zum Haken 13 der Welle 11 ein Gurtband 21 auf. Alternativ zum Gurtband 21 kann an der Innenseite der Plane 20 ein Stahldraht, ein Streifen aus Planenstoff und/oder ein metallisches Bauteil als Einhakprofil vorgesehen sein. Es ist auch möglich, Aufnahmeelemente aus Kunststoff oder Faserverbundwerkstoffen an der Plane 20 vorzusehen.

Das Gurtband 21 verläuft im Wesentlichen in Aufbaulängsrichtung entlang der Plane 20 und ist mit einer Innenseite 25 der Plane 20 fest vernäht. Die Plane 20 ist in Fig. 1 aus Gründen der Übersichtlichkeit zwar nicht dargestellt. Die Vernähung 24 ist jedoch an dem Gurtband 21 angedeutet.

In Bereichen der Plane 20, die im geschlossenen Zustand der Plane 20 auf Höhe der Verriegelungseinrichtung, insbesondere der Welle 11 bzw. der Mittelrunge 10 angeordnet sind, ist das Gurtband 21 von der Innenseite 25 der Plane 20 frei. In diesen Bereichen weist das Gurtband 21 eine Gurtbandverstellung 23 auf. Die Gurtbandverstellung 23 ermöglicht es, eine Schlaufe 22, die zwischen zwei Vernähungen 24 des Gurtbands 21 ausgebildet ist, in ihrer Länge zu verstellen. Auf diese Weise können alterungsbedingte Längungen der Plane 20 ausgeglichen werden. Das Gurtband 21 weist eine Breite auf, die kleiner als die Höhe der Ausnehmung 15 und kommt im geschlossenen Zustand der Plane 20 vorzugsweise im Bereich einer oberen Hälfte der Ausnehmung 15 zur Anlage an die Führungsleiste 14.

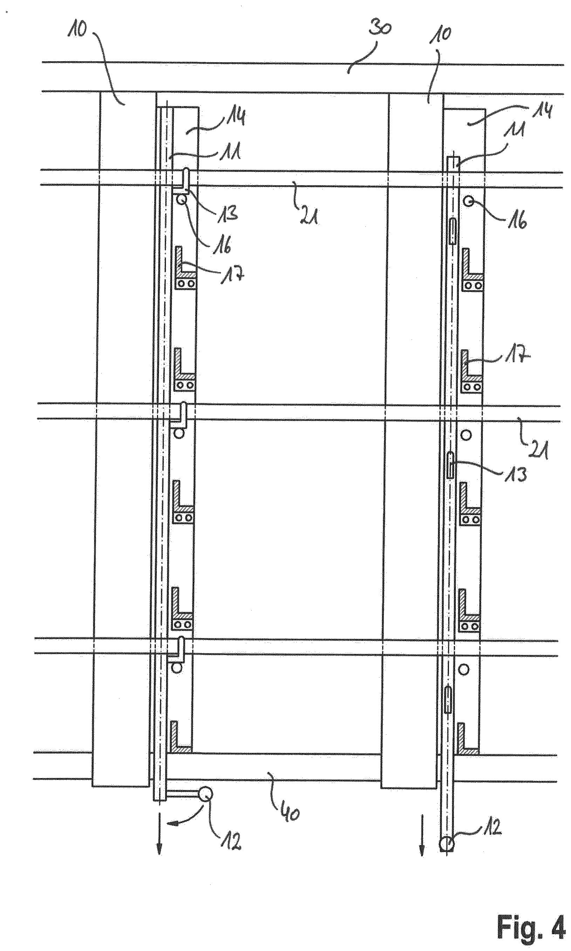

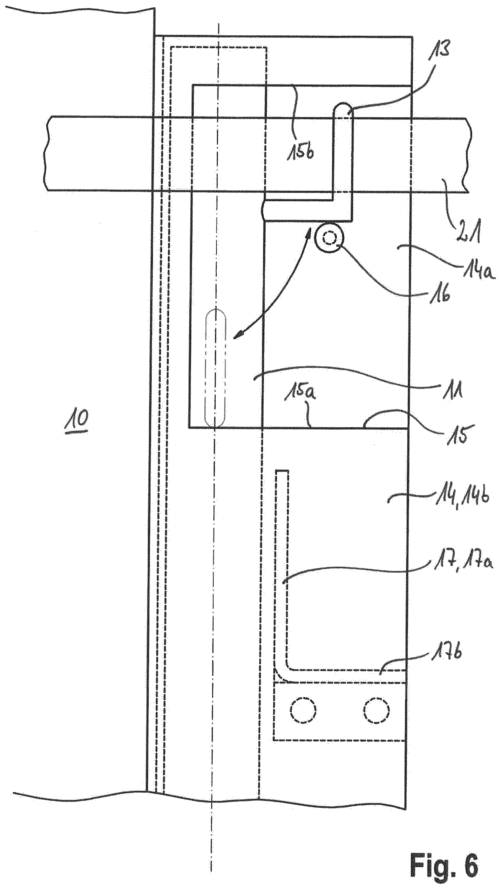

Die Funktionsweise des Befestigungsmechanismus ist in den Figuren 2 und 3 gut erkennbar. Im geschlossenen Zustand der Plane 20 wird diese üblicherweise über an den Eckrungen des Fahrzeugaufbaus angeordnete Wickelwellen gespannt. Gleichzeitig kann die Plane 20 nach unten über Planenspanner am Außenrahmen 40 des Fahrzeugaufbaus gespannt werden. Die Plane 20 liegt so gespannt auf einer Außenfläche der Mittelrunge 10 auf. In der Ausgangsstellung bzw. entriegelten Stellung ist die Welle 11 so gedreht, dass die Haken 13 in Aufbaulängsrichtung ausgerichtet sind. Zur Fixierung der Plane 20 an der Mittelrunge 10 wird nun die Welle 11 zunächst vertikal nach unten verschoben, so dass der Haken unterhalb des Gurtbands 21 der Plane 20 angeordnet ist. Im nächsten Schritt wird der Haken durch Drehung der Welle 11 um 90° nach außen ausgerichtet. Dabei durchgreift der Haken 13 die Ausnehmung 15 in der Führungsleiste 14. Diese Position ist beispielhaft in Fig. 4 (rechte Hälfte) und Fig. 6 erkennbar. In dieser Position drückt der Haken 13 gegen die gespannte Plane 20, so dass die Plane 20 nach außen gewölbt wird. Die Spannung der Plane 20 sorgt nun dafür, dass die Plane 20 eng an der Außenfläche 13e des vertikalen Abschnitts 13a des Hakens 13 anliegt. Dies entspricht der Lösestellung des Hakens 13.

Im nächsten Schritt wird der Haken 13 durch Verschiebung in vertikaler Richtung nach oben in die Eingriffsstellung gebracht. Dabei gleitet der vertikale Abschnitt 13a des Hakens 13 entlang der Innenseite 25 der Plane 20. Die Spitze 13c mit der schrägen Fläche 13d greift dabei zwischen die Innenseite 25 der Plane 20 und die Schlaufe 22 des Gurtbands 21 ein. Die Eingriffsstellung ist erreicht, wenn der Haken 13 vollständig in die Schlaufe 22 des Gurtbands 21 eingreift. Dabei befindet sich der Haken 13 im Wesentlichen auf der halben oder zwei Drittel der Höhe der Ausnehmung 15. Die Eingriffsstellung ist gut in den Figuren 1 und 3 erkennbar.

Zum Spannen der Plane 20 an die Mittelrunge 10 wird nun der Haken 13 durch eine 90° Drehung der Welle 11 in die Spannstellung überführt. Der Haken 13 ist in der Spannstellung wieder in Aufbaulängsrichtung ausgerichtet (Fig. 2). Dabei zieht der Haken 13 an der Schlaufe 22 des Gurtbands 21 und fixiert so die Plane 20 an der Mittelrunge 10.

Um zu vermeiden, dass die Welle 11 in der Spannstellung des Hakens 13 vertikal nach unten rutscht, beispielsweise in Folge ihrer Gewichtskraft, ist in der Führungsleiste 14 vorzugsweise ein Auflageelement 16 vorgesehen. Das Auflageelement 16 kann mit dem inneren Schenkel 14a der Führungsleiste 14 verbunden sein und sich parallel zur Rückwand 14c in Richtung der Ausnehmung 15 der Führungsleiste 14 erstrecken. Das Auflageelement 16 kann beispielsweise durch einen Bolzen gebildet sein. Das Auflageelement ist so angeordnet, dass der Haken 13 in der Spannstellung darauf aufliegt und so eine vertikale Abwärtsbewegung der Welle 11 blockiert wird. Insoweit bildet das Auflageelement 16 einen Anschlag für den Haken 13. Das Auflageelement ist in Fig. 4 gut erkennbar.

Die Betätigung der Welle 11 erfolgt über den Betätigungshebel 12, der in der Grundstellung und der Spannstellung auf Höhe des Außenrahmens 40 des Fahrzeugaufbaus angeordnet ist. Mit Hilfe des Betätigungshebels 12 kann der Bediener die Verriegelungseinrichtung bzw. den gesamten Befestigungsmechanismus von außerhalb des Fahrzeugaufbaus betätigen. Dies erleichtert die Bedienung erheblich. Der Betätigungshebel 12 ist in der Verriegelungsstellung durch einen Riegel 12a am Außenrahmen 40 des Fahrzeugaufbaus festlegbar. Der Riegel 12a ist drehbar am Außenrahmen 40 gelagtert. Der Betätigungshebel 12 weist eine Öffnung 12b auf, die der Riegel 12a durchgreift. Durch Drehung des Riegels 12b um 90° wird der Betätigungshebel 12 in der Verriegelungsstellung fixiert.

Wie in Fig. 4 gut erkennbar ist, weist die Verriegelungseinrichtung eine Welle auf, die vorzugsweise drei Haken 13 umfasst. Entsprechend sind an der Plane 20 drei Gurtbänder 21 vorgesehen, die jeweils einem der Haken 13 zugeordnet sind. Insoweit können mit der Verriegelungseinrichtung mehrere Verriegelungspunkte realisiert werden, so dass eine Spannung der Plane 20 an die Mittelrunge 10 über die gesamte Höhe der Plane 20 ermöglicht wird. Diese Verriegelung über die gesamte Höhe der Plane 20 kann durch eine einzige Betätigung des Betätigungshebels 12 erreicht werden. In Fig. 4 sind mehrere Gurtbänder 21 gezeigt, die an einer Plane 20 angeordnet, insbesondere mit dieser vernäht sind. Die Plane 20 ist aus Gründen der Übersichtlichkeit nicht dargestellt.

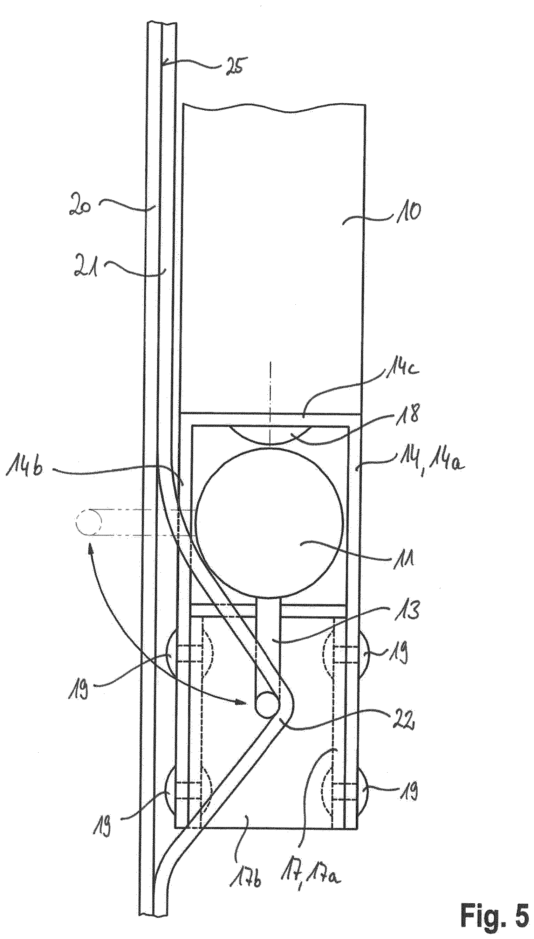

In Fig. 5 ist die Führungsleiste 14 in der Draufsicht detailliert dargestellt. Gut erkennbar ist, dass die Führungsleiste 14 durch ein Befestigungselement 18 mit der Mittelrunge 10 verbunden ist. Das Befestigungselement 18 kann durch eine Schraube, einen Bolzen oder einen Niet gebildet sein. Die Lattenaufnahme 17 ist mit der Führungsleiste 14 vorzugsweise über Nieten 19 verbunden. Dabei erfolgt die Anordnung der Nieten 19 vorzugsweise zwischen den Schenkeln 14a, 14b der Führungsleiste 14 und der Lattenaufnahme 17. Fig. 5 zeigt ebenfalls anschaulich, dass durch die Lattenaufnahme 17 ein Aufnahmeraum für die Welle 11 begrenzt ist.

Fig. 6 zeigt die Führungsleiste 14 nochmals in einer Längsschnittansicht, wobei sowohl die Lösestellung, als auch die Verriegelungsstellung des Hakens 13 angedeutet ist. In der Längsschnittansicht ist erkennbar, dass die Lattenaufnahme 17 im Längsschnitt im Wesentlichen ein L-Profil aufweist. So kann eine Einstecklatte 26 von oben in die Lattenaufnahme 17 eingelegt werden. Ebenfalls gut erkennbar ist das Auflageelement 16, das den Haken 13 nach unten abstützt, wenn der Haken 13 in der Spannstellung angeordnet ist. In Fig. 6 ist auch ein Gurtband 21 gezeigt. Die Plane 20, mit der das Gurtband 21 verbunden ist, ist nicht dargestellt.

### Bezugszeichenliste

- 10: Mittelrunge
- 11: Welle
- 12: Betätigungshebel
- 12a: Riegel
- 12b: Öffnung
- 13: Haken
- 13a: vertikaler Abschnitt
- 13b: horizontaler Abschnitt
- 13c: Spitze
- 13d: schräge Fläche
- 13e: Außenfläche
- 14: Führungsleiste
- 14a: innerer Schenkel
- 14b: äußerer Schenkel
- 14c: Rückwand
- 15: Ausnehmung
- 15a: untere Begrenzungskante
- 15b: obere Begrenzungskante
- 16: Auflageelement
- 17: Lattenaufnahme
- 17a: U-Profil
- 17b: Auflageplatte
- 18: Befestigungselement
- 19: Niet
- 20: Plane
- 21: Gurtband
- 22: Schlaufe
- 23: Gurtbandverstellung
- 24: Vernähung
- 25: Innenseite
- 26: Einstecklatte
- 30: Dachholm
- 40: Außenrahmen

## Patentansprüche

1. Fahrzeugaufbau, insbesondere für Nutzfahrzeuge, mit wenigstens einer Mittelrunge (10) und einer Plane (20), die in einem geschlossenen Zustand durch einen Befestigungsmechanismus an der Mittelrunge (10) fixierbar ist und einen Laderaum begrenzt,
**dadurch gekennzeichnet, dass**
der Befestigungsmechanismus eine an der Mittelrunge (10) beweglich angeordnete Verriegelungseinrichtung aufweist.

2. Fahrzeugaufbau nach Anspruch 1,
**dadurch gekennzeichnet, dass**
die Verriegelungseinrichtung von außerhalb des Laderaums betätigbar ist.

3. Fahrzeugaufbau nach Anspruch 1 oder 2,
**dadurch gekennzeichnet, dass**
die Verriegelungseinrichtung eine drehbare und vertikal verschiebbare Welle (11) aufweist.

4. Fahrzeugaufbau nach einem der vorhergehenden Ansprüche,
**dadurch gekennzeichnet, dass**
die Verriegelungseinrichtung, insbesondere die Welle (11), einen Betätigungshebel (12) aufweist, der im geschlossenen Zustand der Plane (20) frei zugänglich, insbesondere in vertikaler Richtung unterhalb der Plane (20), angeordnet ist.

5. Fahrzeugaufbau nach einem der vorhergehenden Ansprüche,
**dadurch gekennzeichnet, dass**
die Verriegelungseinrichtung wenigstens ein, insbesondere drehfest mit der Welle (11) verbundenes, Eingriffselement (13) aufweist, das zum lösbaren Eingriff in ein Aufnahmeelement (21) der Plane (20) angepasst ist.

6. Fahrzeugaufbau nach Anspruch 5,
**dadurch gekennzeichnet, dass**
das Aufnahmeelement (21) auf einer Innenseite der Plane (20) angeordnet ist.

7. Fahrzeugaufbau nach Anspruch 5 oder 6,
**dadurch gekennzeichnet, dass**
das Aufnahmeelement (21) eine Schlaufe (22) oder ein starres Profilelement aufweist.

8. Fahrzeugaufbau nach einem der Ansprüche 5 bis 7,
**dadurch gekennzeichnet, dass**
das Aufnahmeelement (21), insbesondere die Schlaufe (22), längenverstellbar ist.

9. Fahrzeugaufbau nach einem der Ansprüche 5 bis 8,
**dadurch gekennzeichnet, dass**
das Eingriffselement (13) eine abgeschrägte Spitze (13c) aufweist.

10. Fahrzeugaufbau nach einem der Ansprüche 5 bis 9,
**dadurch gekennzeichnet, dass**
das Eingriffselement (13) parallel zum Betätigungshebel (12) ausgerichtet ist.

11. Fahrzeugaufbau nach einem der Ansprüche 3 bis 10,
**dadurch gekennzeichnet, dass**
die Welle (11) in einer Führungsleiste (14) drehbar gelagert ist, die seitlich, insbesondere in Aufbaulängsrichtung fluchtend mit der Mittelrunge (10), an der Mittelrunge (10) befestigt ist.

12. Fahrzeugaufbau nach Anspruch 11,
**dadurch gekennzeichnet, dass**
die Führungsleiste (14) eine Ausnehmung (15) mit einer Höhe aufweist, die so angepasst ist, dass das Eingriffselement (13) von einer Lösestellung in eine Eingriffsstellung vertikal verschiebbar ist.

13. Fahrzeugaufbau nach einem der Ansprüche 11 bis 12,
**dadurch gekennzeichnet, dass**
die Führungsleiste (14) eine Lattenaufnahme (17) für eine Einstecklatte aufweist.

14. Nutzfahrzeug, insbesondere Planensattelauflieger, mit einem Fahrzeugaufbau nach einem der vorhergehenden Ansprüche.

15. Verfahren zum Herstellen eines Fahrzeugaufbaus oder Nutzfahrzeugs nach einem der vorhergehenden Ansprüche, wobei wenigstens eine Verriegelungseinrichtung des Befestigungsmechanismus mit wenigstens einer Mittelrunge (10) des Fahrzeugaufbaus verbunden wird und
- wenigstens ein Aufnahmeelement (21) des Befestigungsmechanismus mit der Plane (10) des Fahrzeugaufbaus fest verbunden wird
oder
- eine vorhandene Plane (10) durch eine Plane (10) mit einem Aufnahmeelement (21) ersetzt wird.

## Claims

1. A vehicle body, in particular for commercial vehicles, having at least one middle stake (10) and a tarpaulin (20), which can be fixed to the middle stake (10) by a fastening mechanism and delimits a load space when in a closed state,
**characterised in that**
the fastening mechanism has a locking device arranged movably on the middle stake (10).

2. The vehicle body according to Claim 1,
**characterised in that**
the locking device can be operated from outside the load space.

3. The vehicle body according to Claim 1 or 2,
**characterised in that**
the locking device has a rotatable and vertically displaceable shaft (11).

4. The vehicle body according to any one of the preceding claims,
**characterised in that**
the locking device, in particular the shaft (11), has an operating lever (12) which, when the tarpaulin (20) is closed, is arranged in a freely accessible manner, in particular in the vertical direction below the tarpaulin (20).

5. The vehicle body according to any one of the preceding claims,
**characterised in that**
the locking device has at least one engagement element (13) which is in particular connected for conjoint rotation to the shaft (11) and is adapted for releasable engagement in a receiving element (21) of the tarpaulin (20) .

6. The vehicle body according to Claim 5,
**characterised in that**
the receiving element (21) is situated on an inner face of the tarpaulin (20).

7. The vehicle body according to Claim 5 or 6,
**characterised in that**
the receiving element (21) has a loop (22) or a rigid profiled element.

8. The vehicle body according to any one of Claims 5 to 7,
**characterised in that**
the receiving element (21), in particular the loop (22), is adjustable in length.

9. The vehicle body according to any one of Claims 5 to 8,
**characterised in that**
the engagement element (13) has a tapered tip (13c).

10. The vehicle body according to any one of Claims 5 to 9,
**characterised in that**
the engagement element (13) is oriented parallel to the operating lever (12).

11. The vehicle body according to any one of Claims 3 to 10,
**characterised in that**
the shaft (11) is mounted rotatably in a guide strip (14) which is fastened to the side of the middle stake (10), in particular flush with the middle stake (10) in the longitudinal direction of the body.

12. The vehicle body according to Claim 11,
**characterised in that**
the guide strip (14) comprises a cut-out (15) having a height such that the engagement element (13) can be displaced vertically from a released position into an engaged position.

13. The vehicle body according to either of Claims 11 to 12,
**characterised in that**
the guide strip (14) has a slat receptacle (17) for an insertable slat.

14. A commercial vehicle, in particular a curtain-sided semi-trailer, having a vehicle body according to any one of the preceding claims.

15. A method for producing a vehicle body or commercial vehicle according to any one of the preceding claims, wherein at least one locking device of the fastening mechanism is connected to at least one middle stake (10) of the vehicle body, and
- at least one receiving element (21) of the fastening mechanism is fixedly connected to the tarpaulin (10) of the vehicle body, or
- an existing tarpaulin (10) is replaced by a tarpaulin (10) having a receiving element (21).

## Revendications

1. Carrosserie de véhicule, destinée notamment à des véhicules utilitaires, pourvue d'au moins un rancher central (10) et d'une bâche (20), qui à l'état fermé est susceptible d'être fixée sur le rancher central (10) par un mécanisme de fixation et qui délimite un espace de chargement,
**caractérisée en ce que**
le mécanisme de fixation comporte un système de verrouillage placé de manière mobile sur le rancher central (10).

2. Carrosserie de véhicule selon la revendication 1,
**caractérisée en ce que**
le système de verrouillage est susceptible d'être actionné à partir de l'extérieur de l'espace de chargement.

3. Carrosserie de véhicule selon la revendication 1 ou 2,
**caractérisée en ce que**
le système de verrouillage comporte un arbre (11) rotatif et déplaçable à la verticale.

4. Carrosserie de véhicule selon l'une quelconque des revendications précédentes,
**caractérisée en ce que**
le système de verrouillage, notamment l'arbre (11), comporte un levier de manœuvre (12), qui à l'état fermé de la bâche (20) est librement accessible, notamment en direction verticale, en-dessous de la bâche (20).

5. Carrosserie de véhicule selon l'une quelconque des revendications précédentes,
**caractérisée en ce que**
le système de verrouillage comporte au moins un élément d'engagement (13), assemblé notamment de manière solidaire en rotation avec l'arbre (11), qui est adapté pour l'engagement amovible dans un élément de logement (21) de la bâche (20).

6. Carrosserie de véhicule selon la revendication 5,
**caractérisée en ce que**
l'élément de logement (21) est placé sur une face intérieure de la bâche (20).

7. Carrosserie de véhicule selon la revendication 5 ou 6,
**caractérisée en ce que**
l'élément de logement (21) comporte une boucle (22) ou un élément profilé rigide.

8. Carrosserie de véhicule selon l'une quelconque des revendications 5 à 7,
**caractérisée en ce que**
l'élément de logement (21), notamment la boucle (22), est réglable en longueur.

9. Carrosserie de véhicule selon l'une quelconque des revendications 5 à 8,
**caractérisée en ce que**
l'élément d'engagement (13) comporte une pointe (13c) chanfreinée.

10. Carrosserie de véhicule selon l'une quelconque des revendications 5 à 9,
**caractérisée en ce que**
l'élément d'engagement (13) est orienté à la parallèle du levier de manœuvre (12).

11. Carrosserie de véhicule selon l'une quelconque des revendications 3 à 10,
**caractérisée en ce que**
l'arbre (11) est logé de manière rotative dans une baguette de guidage (14) qui est fixée latéralement, notamment dans la direction longitudinale de la carrosserie en alignement sur le rancher central (10), sur le rancher central (10).

12. Carrosserie de véhicule selon la revendication 11,
**caractérisée en ce que**
la baguette de guidage (14) comporte un évidement (15) d'une hauteur qui est adaptée, de telle sorte que l'élément d'engagement (13) soit déplaçable à la verticale d'une position de désolidarisation dans une position d'engagement.

13. Carrosserie de véhicule selon l'une quelconque des revendications 11 ou 12,
**caractérisée en ce que**
la baguette de guidage (14) comporte un logement de latte (17) pour une latte à insérer.

14. Véhicule utilitaire, notamment semi-remorque bâchée, pourvue d'une carrosserie de véhicule selon l'une quelconque des revendications précédentes.

15. Procédé, destiné à fabriquer une carrosserie de véhicule ou véhicule utilitaire selon l'une quelconque des revendications précédentes, lors duquel on relie au moins un système de verrouillage du mécanisme de fixation avec au moins un rancher central (10) de la carrosserie de véhicule et
- on relie solidement au moins un élément de logement (21) du mécanisme de fixation avec la bâche (10) de la carrosserie de véhicule
ou
- on remplace une bâche (10) présente par une bâche (10) pourvue d'un élément de logement (21).
